Europäisches Patentamt

European Patent Office

Office européen des brevets

(11) Veröffentlichungsnummer: **0 267 545**
**A2**

(12) **EUROPÄISCHE PATENTANMELDUNG**

(21) Anmeldenummer: 87116373.9

(22) Anmeldetag: 06.11.87

(51) Int. Cl.⁴: **B30B 15/16 , B23Q 16/00**

(30) Priorität: **12.11.86 DE 3638621**

(43) Veröffentlichungstag der Anmeldung:
**18.05.88 Patentblatt 88/20**

(84) Benannte Vertragsstaaten:
**DE ES FR GB NL**

(71) Anmelder: **Lindemann Maschinenfabrik GmbH**
**Erkrather Strasse 401**
**D-4000 Düsseldorf 1(DE)**

(72) Erfinder: **Nuggel, Klaus**
**Nixenstrasse 56**
**D-4000 Düsseldorf 13(DE)**

(74) Vertreter: **Bergen, Klaus, Dipl.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Positionsüberwachungsvorrichtung.**

(57) Eine Vorrichtung zum Kontrollieren der Position eines Maschinenteils, insbesondere eines eine Schaltstange (21) aufweisenden, beweglichen Maschinenteils (14), mit im Bereich des Hubweges der Schaltstange (21) angeordneten Signalgebern (24, 25, 26), weise eine ein-und ausfahrbare Schaltstange (21) auf.

Fig. 2

EP 0 267 545 A2

## "Positionsüberwachungsvorrichtung"

Die Erfindung betrifft eine Vorrichtung zum Kontrollieren der Position eines Maschinenteils, insbesondere eines eine Schaltstange aufweisenden, beweglichen Maschinenteils, mit im Bereich des Hubweges der Schaltstange angeordneten Signalgebern.

Bei bekannten Vorrichtungen der genannten Art werden die zeit-und/oder wegabhängigen, zum Teil ineinandergreifenden, d.h. sich überlagernden Arbeitsabläufe oder Funktionen mit einer starren Schaltstange gesteuert bzw. ausgelöst; die Schaltstange wirkt mit kapazitiven und induktiven, berührungsfreien Endschaltern zusammen. Das Vorbeifahren der eisernen Schaltstange an den Endschaltern bewirkt nämlich Stromimpulse, die dann in einer weiteren Folgeschaltung Schaltimpulse auslösen, die die Schaltglieder für den Steuerungsablauf der Maschine betätigen. Zur Positionsüberwachung bei geringen Hubwegen sind Vorrichtungen bekannt, die bei anstehenden, niedrigen Druckverhältnissen mit kurzen Schaltstangen ausgerüstet sind und aufgrund ihres geringen Hubweges nur relativ wenig Platz benötigen. Hingegen stellt eine Vorrichtung mit sehr langem Hubweg bzw. langer Schaltstange hinsichtlich der Aufstellung bzw. Anbringung und des erforderlichen Platzbedarfs ein großes Problem dar. In diesem Fall wird bei vorbekannten Vorrichtungen die Schaltstange mittels einer Seilwinde in eine andere Ebene verlagert, beispielsweise in die Vertikalbene. Dadurch ergibt sich jedoch eine konstruktiv aufwendige und raumgreifende Bauweise, wobei der durch das Verlagern der Schaltstange erforderliche Aufbau in der Regel auch noch im Arbeitsbereich stört.

Anwendungs-bzw. Einsatzgebiete für das Kontrollieren der Position eines verstellbaren Maschinenteils könen z.B. ein von einem Spannzylinder zum Spannen eines Werkzeuges und/oder Werkstückes gegen den Maschinentisch einer Werkzeugmaschine bewegter Zuganker oder eine Preßplatte bzw. eine Preßstempel insbesondere eines Fertigdruckzylinders einer Paketierpresse sein. Die Kontrollfunktion ist sowohl für die Funktion der Maschine bzw. Anlage als auch für von der jeweiligen Position abgeleitete Folgefunktionen von Bedeutung; z.B. ist es für den Betrieb einer Presse zum Verdichten von Abfallstoffen wichtig, die mit der Arbeitsstufe "Paket fertig" gleichbedeutende Preßhub-Endposition des Fertigdruckzylinders, d.h. den Weg der von dem Fertigdruckzylinder vorgeschobenen Preßplatte zu kontrollieren, um daraufhin die Folgefunktion des Öffnens der Ausstoßtür auszulösen, nach deren Öffnen das Paket mittels des Fertigdruckzylinders aus der Presse gestoßen wird.

Es ist bei diesen Pressen bekannt, zum Kontrollieren der jeweils eine Folgefunktion auslösenden Position der Preßstempel Endschalter im Bereich des Weges des Preßplattenhubes anzuordnen. Allerdings ist es aufgrund der räumlichen Verhältnisse oftmals nicht möglich, Endschalter in der erforderlichen Anzahl und/oder an den gewünschten Positionen anzubringen, weil die Preßplatte Bereiche durchfährt, in denen sich entweder mangels geeigneter Anbringungsmöglichkeiten keine Endschalter montieren lassen oder dort montierte Endschalter bzw. sonstige elektrische Signalgeber zerstört würder.

Der Erfindung liegt die Aufgabe zugrunde, Vorrichtungen der eingangs genannten Art so zu gestalten, daß sich eine kompakte Bauweise ergibt, die mit geringstmöglichem Platzbedarf, ohne konstruktiv aufwendige Maschinenteile und bautechnische Maßnahmen auskommt.

Diese Aufgabe wird erfindungsgemäß dadurch gelöst, daß die Schaltstange ein-und ausfahrbar ist. Durch diese Maßnahme lassen sich die Signalgeber so anordnen, daß die Schaltstange zum Abfahren und Auslösen der Signalgebar keine langen Wege zurückzulegen braucht. Die erfindungsgemäß erreichte kompakte Bauweise bringt gegenüber der bekannten Vorrichtung mit starrer Schaltstange eine Verkürzung der Baulänge von annähernd 50 % mit sich.

Die Schaltstange kragt vorzugsweise entgegen der Richtung des Hubes des Maschinenteils vor und läßt sich bei den einleitend angesprochenen Pressen beispielsweise an einer Preßplatte anordnen. Bei der Presse kann der in Preßrichtung hinter der Preßplatte liegende freie Raum mit einer Schaltstange solcher Länge überbrückt werden, daß die Schaltstange in jeder Position der Preßplatte bis in einen Bereich der Presse ragt, in dem sich beliebig viele, von außen leicht zugängliche, mit dem zu verdichtenden Material nicht in Berührung kommende Endschalter als Signalgeber anbringen lassen.

Es empfiehlt sich, eine teleskopierbare, vorzugsweise eine durch ein als mechanische oder pneumatische Druckfeder ausgebildetes Stellglied selbsttätig teleskopierbare Schaltstange zu verwenden. Eine druckbeaufschlagte, vorteilhaft beim Rückhub des verfahrbaren Maschinenteils auf einen in die Bewegungsbahn der Schaltstange ragenden Anschlag treffende und sich dabei in das Maschinenteil hineinschiebende sowie dabei die Druckfeder zusammendrückende Schaltstange besitzt gegenüber der starr festgelegten, weit vorkragenden Schaltstange den Vorteil einer äußerst kompakten, d.h. keinen zusätzlichen Raum beanspruchenden Bauweise. Die Druckfeder wird durch das Zusammendrücken vorgespannt; die Vorspannkraft bewirkt das Ausfahren der Schaltstange, sobald sich das Maschinenteil von dem Anschlag entfernt.

Vorteilhaft läßt sich eine die Druckfeder aufnehmende Sackbohrung in der in Hubrichtung abgewandten Stirnseite desbeweglichen Maschinenteils und ein fluchtend mit der Sackbohrung angeordnetes, die Schaltstange umhüllendes Führungsrohr vorsehen. Die Bohrung kann von solcher Länge bzw. Tiefe sein, daß die Schaltstange darin eintauchen kann, bis sie lediglich noch mit ihrem vorderen Ende und einer dort angeordneten Schaltfahne aus dem Führungsrohr ragt, was die Kompaktbauweise weiter fördert.

Die Druckfeder kann anstatt von der Sackbohrung von einem Führungsrohr aufgenommen werden und sich an der in Hubrichtung abgewandten Stirnseite des beweglichen Maschinenteils abstützen. Diese Alternative kommt dann in Betracht, wenn das Maschinenteil nicht genügend dick ist, um eine Sackbohrung mit der dem Ausfahrweg der Schaltstange zuzüglich der Länge der zusammengepreßten Druckfeder entsprechenden erforderlichen Tiefe bzw. Länge bohren zu können.

Vorzugsweise läßt sich ein den vorderen Abschnitt des in das Führungsrohr eingreifenden Endes der Schaltstange fest umschließendes Anschlagrohr vorsehen, das sich gegen einen an einem Flansch des Führungsrohres befestigten Deckel legt, der die Länge der aus dem Führungsrohr vorkragenden Schaltstange beim Hub begrenzt. Das beispielsweise mit der Schaltstange verschweißte Anschlagrohr dient als Begrenzung des Hubes bzw. des Federweges der sich entspannenden Druckfeder und damit gleichzeitig der Begrenzung der gegenüber der Preßplatte vorkragenden Schaltstange, d.h. der Anschlag bestimmt, mit welcher Länge die Schaltstange vorkragt.

In weiterer Ausgestaltung der Erfindung kann das Führungsrohr aus einem äußeren Rohrabschnitt und mindestens einem inneren, die Schaltstange unmittelbar umhüllenden Rohrabschnitt bestehen und kann jeder innere Rohrabschnitt wie die Schaltstange druckfederbeaufschlagt teleskopierbar sein. Druch das mehrteilige Führungsrohr und bedingt durch das Ineinandergreifen bzw. - schieben der einzelnen Beauteile - Rohrabschnitte und Schaltstange - wird die Kompaktbauweise der Vorrichtung noch erheblich gefördert; es läßt sich selbst ein großer Hubweg des Maschinenteils, der eine entsprechend große vorkragende Länge der ausgefahrenen Schaltstange bis in den Bereich der Endschalter erfordert, durch mehrere kurze, sich addierende Ausfahrwege des oder der Rohrabschnitte und der Schaltstange überbrücken. Der für das ineinandergeschobene, mehrteilige Führungsrohr benötigte Raum, d.h. die Länge des äußeren Rohrabschnittes ist nicht größer als für ein einteiliges Führungsrohr.

Vorteilhaft wird jeder innere Rohrabschnitt an dem in den jeweils äußeren Rohrabschnitt eingreifenden Ende und die Schaltstange an dem in den inneren Rohrabschnitt eingreifenden Ende fest von einem Anschlagrohr umschlossen, wobei sich die Anschlagrohre gegen einen den aus dem jeweils äußeren Rohrabschnitt vorkragenden inneren Rohrabschnitt beim Ausfahren begrenzenden und gegen eine die aus dem inneren Rohrabschnitt vorkragende Schaltstange beim Ausfahren begrenzenden, an einem Flansch des jeweils äußeren und des inneren Rohrabschnitts befestigten Deckel legen. Auf diese Weise lassen sich die Ausfahrwege der Rohrabschnitte bzw. der Schaltstange unter Berücksichtigung des Federweges der sich entspannenden Druckfeder genau vorherbestimmen.

Vorteilhaft läßt sich eine in eine Führungsnut im jeweils inneren Rohrabschnitt und in der Schaltstange eingreifende, vorzugsweise am Anschlagdeckel des Führungsrohres oder der Rohrabschnitte befestigte Verdrehsicherung anordnen und damit gewährleisten, daß eine am vordersten Ende der Schaltstange angeordnete Schaltfahne ihre zu den Endschaltern ausgerichtete Lage beibehält. Beispielsweise kann eine Spannhülse, ein Stift, ein Gewindebolzen oder ein Splint in die axiale Führungsnut eingreifen und für die verdrehfreie Führung der Schaltstange sorgen.

Die Erfindung wird nachfolgend anhand eines in der Zeichnung dargestellten, im Rahmen der Erfindung bevorzugten Ausführungsbeispiels einer Positionsüberwachungsvorrichtung einer Presse zum Verdichten von Abfallstoffen näher erläutert. In der Zeichnung zeigen:

Fig. 1 Eine perspektivische Ansicht einer - schematisch dargestellten Presse;

Fig. 2 im Schnitt eine Draufsicht auf eine Presse;

Fig. 3 als Einzelheit einen Schnitt durch eine in einem Führungsrohr angeordnete, federbeaufschlagte Schaltstange einer Positionsüberwachungsvorrichtung; und

Fig. 4 als Einzelheit einen Schnitt durch eine in einem mehrteilig ausgebildeten federbeaufschlagten Führungsrohr angeordnete federbeaufschlagte Schaltstange.

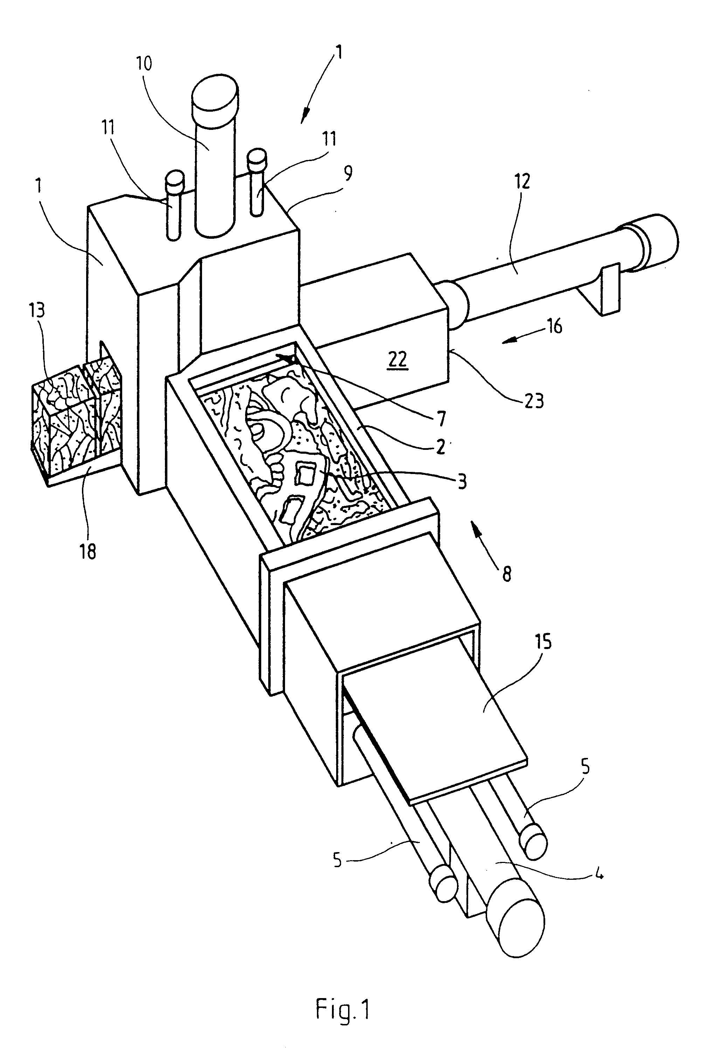

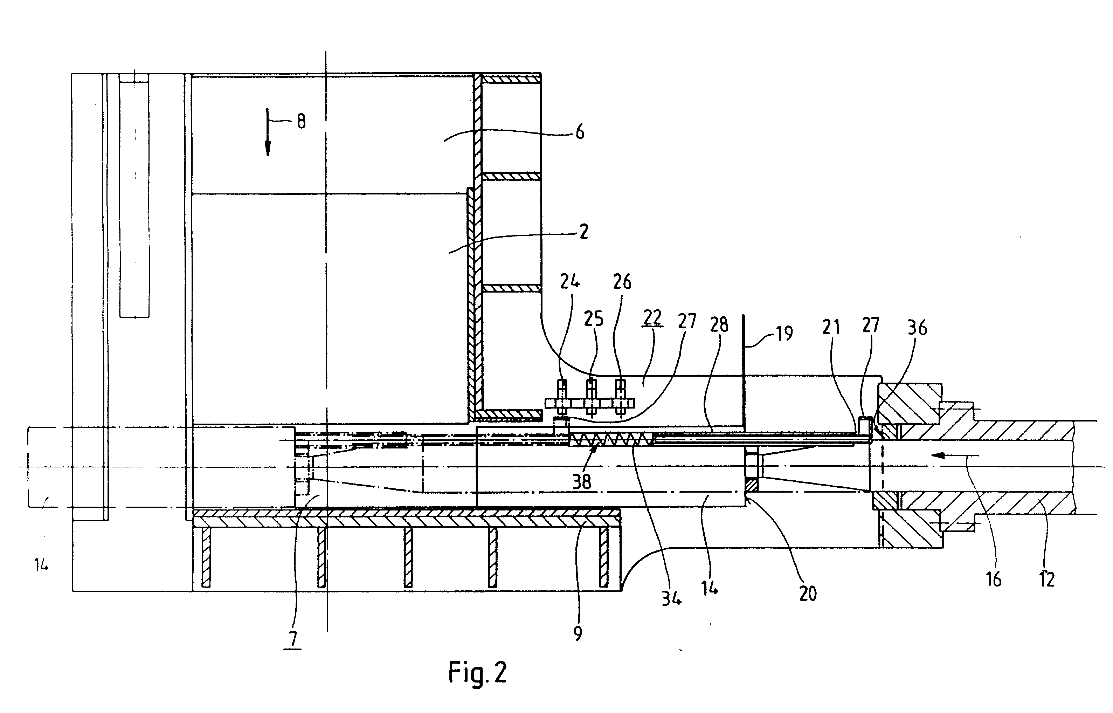

Die in Fig. 1 dargestellte Presse 1 besteht aus einem Füllkasten 2 für darin von oben einzufüllendes zu verpressendes Material 3, einem Fülldruckzylinder 4, der mit einer in Stangen 5 geführten Fülldruckpreßplatte 6 das zu verpressende Material 3 in eine Preßkammer 7 eines sich dem Füllkasten 2 in Hubrichtung 8 des Fülldruckpreßzylinders 4 anschließenden Preßkastens 9 schiebt, sowie einem das Material 3 in der Preßkammer 7 von oben auf die endgültige Pakethöhe bzw. -dicke pressenden, im Preßkasten 9 vertikal angeordneten Zwischendruckzylinder 10 mit Stangenführungen 11 für die Zwischendruckpreßplatte und einem quer zum Füllkasten 2 angeordneten Fertigdruckzylinder 12, der eine dem Querschnitt eines fertigen Paketes 13 angepaßte, das verfahrbare Maschinenteil darstellende Fertigdruckpreßplatte 14 (vgl. Fig. 2) aufweist. Zum Herstellen eines fertigen Paketes 13 wird nach dem Befüllen des Füllkastens 2 mit zu verpressendem Material 3 die Fülldruckpreßplatte 6 mittels des Zylinders 4 in Hubrichtung 8 vorgeschoben und dabei das Material 3 in die Preßkammer 7 gedrückt; eine Deckplatte 15 verschließt in der vorgefahrenen Position der Fülldruckpreßplatte 6 den Füllkasten 2.

Der Zwischendruckzylinder 10 preßt das Material 3 von oben auf die endgültige Höhe eines fertigen Paketes 13 zusammen; während dieser Zeit kann die Deckplatte 15 mit Material 3 neu beladen werden. Nach dem vertikalen Verdichten wird das Paket beim Vorschieben der Fertigdruckpreßplatte 14 in Richtung des Preßhubes 16 fertig gepreßt; sobald die Fertigdruckpreßplatte 7 ihre Endpreßposition erreicht hat, bewirkt ein Signal das Öffnen einer dem Fertigdruckzylinder 12 in Preßhubrichtung 16 gegenüberliegenden, in einer Seitenwand 17 des Preßkastens 9 angeordneten Ausstoßtür 18; sobald die Ausstoßtür 18 geöffnet ist, wird der Fertigdruckzylinder 12 erneut beaufschlagt, drückt mit der Fertigdruckpreßplatte 14 das fertige Paket 13 zum Abtransport aus dem Preßkasten 9 heraus und fährt anschließend in seine Ausgangsposition zurück. Danach wird die Ausstoßtür 14 wieder verriegelt und werden die Zwischendruckplatte und die Fülldruckpreßplatte 6 in ihre Ausgangsposition zurückgefahren; beim Rückhub der Fülldruckpreßplatte 6 wird das zuvor auf die Deckplatte 15 gefüllte Material 3 in den Füllkasten 2 abgestrieft.

Zum Kontrollieren der genauen Position der Fertigdruckpreßplatte 14 auf ihrem Weg von der in Fig. 2 in durchgezogenen Linien dargestellten, durch eine Querlinie gekennzeichneten Ausgangslage 19 bis in die mit strichpunktierten Linien der Fertigdruckpreßplatte 14 dargestellte Position nach dem Ausstoßen eines Paketes 13, besitzt die Preßplatte 14 an ihrer in Hubrichtung 16 abgewandten Stirnseite 20 eine Schaltstange 21; die Schaltstange 21 überbrückt den freien Raum der Preßkammer 7 hinter der Preßplatte 14 bis in den Bereich von an einer Seitenwand 22 eines Gehäuses 23 des Fertigdruckzylinders 12 befestigten Endschaltern 24, 25, 26. Der Kontakt mit den unterschiedliche Positionen der Preßplatte 14 angebenden Endschaltern 24, 25, 26 wird durch eine Schaltfahne 27 bewirkt, die an dem der Preßplatte 14 abgewandten Ende der Schaltstange 21 befestigt ist.

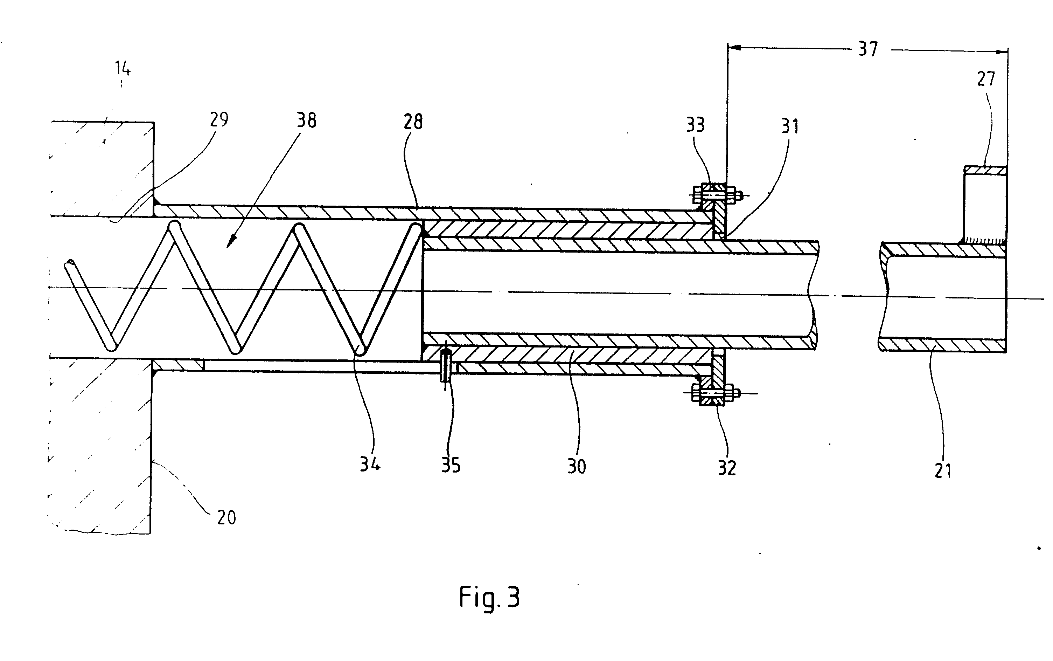

Wie im einzelnen in Fig. 3 dargestellt ist, greift die Schaltstange 21 in ein Führungsrohr 28 ein, dessen Innendurchmesser mit einer in der Fertigdruckpreßplatte 14 angeordneten Sackbohrung 29 fluchtet; das Führungsrohr 28 und die Preßplatte 14 sind miteinander verschweißt. Der vordere Abschnitt des in das Führungsrohr 28 eingreifenden Endes der Schaltstange 21 wird von einem Anschlagrohr 30 fest umschlossen, das den Weg der sich herausstellenden Schaltstange 21 begrenzt; das Anschlagrohr 30 legt sich dazu gegen einen am Ende des Führungsrohrs 28 angeordneten Deckel 32, der eine mindestens dem Durchmesser der Schaltstange 21 entsprechende Durchgangsbohrung 31 aufweist; die Durchgangsbohrung 31 ist jedoch kleiner als der Außendurchmesser des Führungsrohres 28. Der Deckel 32 ist an einem mit dem Führungsrohr 28 verschweißten Flansch 33 befestigt, z.B. festgeschraubt.

Eine in die Sackbohrung 29 der Preßplatte 14 als Stellglied 38 eingesetzt Druckfeder 34 entspannt sich beim Preßhub 16 des Fertigdruckzylinders 12 und schiebt das Anschlagrohr 30 der Schaltstange 21 gegen den den Ausfahrweg 37, d.h. die Länge der aus dem Führungsrohr 28 vorkragenden Schaltstange 21 begrenzenden Deckel 32; die Schaltstange 21 ragt aus dem Führungsrohr 28 bis in den Bereich der Endschalter 24, 25, 26. Als Verdrehsicherung der Schaltstange 21 beim Verschieben dient ein von unter in die Schaltstange 21 eingesetzter, in eine Führungsnut des Führungsrohres 28 eingreifender Bolzen 35, z.B. in Form einer Spannhülse. Beim Rückhub der Fertigdruckpreßplatte 14 trifft die Schaltstange 21 auf einen Anschlag 36 und schiebt sich gegen die Kraft der Druckfeder 34 zunehmend weiter in das Führungsrohr 28 und in die Sackbohrung 29 hinein, wobei gleichzeitig die Druckfeder 34 vorgespannt wird; diese Position ist in der in Fig. 2 mit durchgezogenen Linien dargestellten Ausgangslage 19 der Preßplatte 14 erreicht.

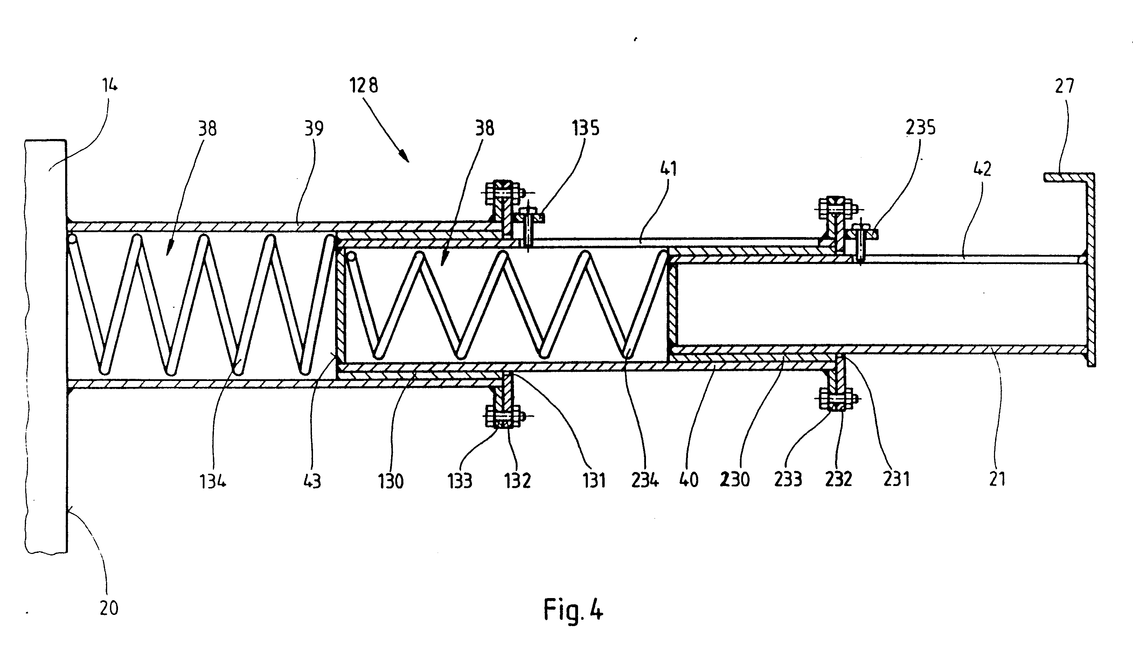

Bei der Ausführung gemäß Fig. 4 ist das Führungsrohr 128 mehrteilig und besteht aus einem koaxial in einen äußeren Rohrabschnitt 39 eingreifenden inneren Rohrabschnitt 40. Der äußere Rohrabschnitt 39 ist an der Stirnwand 20 des beweglichen Maschinenteils, d.h. in diesem Fall der Fertigdruckpreßplatte 14 verschweißt; eine vom äußeren Rohrabschnitt 39 aufgenommene, als Stellglied 38 eingesetzte Druckfeder 134 stützt sich somit einerseits an der Stirnwand 20 ab und legt sich andererseits gegen die Stirnfläche des inneren Rohrabschnitts 40. Das vordere Ende des in den äußeren Rohrabschnitt 39 eingreifenden inneren Rohrabschnitts 40 wird von einem Anschlagrohr 130 fest umschlossen, das den Weg des unter der Kraft der Druckfeder 134 ausfahrbaren inneren Rohrabschnitts 40 begrenzt; das Anschlagrohr 130 legt sich dazu gegen einen an einem mit dem äußeren Rohrabschnitt 39 verschweißten Flansch 133 festgeschraubten Deckel 132. Der Deckel 132 weist eine den Druchtritt des inneren Rohrabschnitts 40 erlaubende Druchgangsbohrung 131 auf.

Das vordere Ende der gleitend im inneren Rohrabschnitt 40 geführten Schaltstange 21 wird von dem den Weg der ausfahrbaren Schaltstange 21 begrenzenden Anschlagrohr 230 fest umschlossen; das Rohr 230 legt sich dazu gegen einen an einem mit dem inneren Rohrabschnitt 40 verschweißten Flansch 233 festgeschraubten, eine den Durchtritt der Schaltstange 21 erlaubende Durchgangsbohrung 231 aufweisenden Deckel 232. Die Schaltstange 21 steht unter der Kraft einer Druckfeder 234, die vom inneren Rohrabschnitt 40 aufgenommen wird; die Druckfeder 234 stützt sich einerseits an einem Boden 43 des inneren Rohrabschnitts 40 ab und legt sich andererseits gegen die Stirnfläche der Schaltstange 21. Sowohl der innere Rohrabschnitt 40 als auch die Schaltstange 21 werden durch je eine Verdrehsicherung 135, 235 in ihrer axial ausgerichteten Lage gehalten; die jeweils am Deckel 132 bzw. 232 befestigten, z.B. als Bolzen oder Stifte ausgebildeten Verdrehsicherungen 135 bzw. 235 greifen zu diesem Zweck in eine Führungsnut 41 des inneren Rohrabschnitts 40 bzw. in eine Führungsnut 42 der Schaltstange 21 ein.

**Ansprüche**

1. Vorrichtung zum Kontrollieren der Position eines Maschinenteils, insbesondere eines eine Schaltstange aufweisenden, beweglichen Maschinenteils, mit im Bereich des Hubweges der Schaltstange angeordneten Signalgebern, dadurch gekennzeichnet, daß die Schaltstange (21) ein-und ausfahrbar ist.

2. Vorrichtung nach Anspruch 1, gekennzeichnet durch einen Anschlag (32), der den Ausfahrweg (37) der Schaltstange (21) begrenzt.

3. Vorrichtung nach Anspruch 1 oder 2, dadurch gekennzeichnet, daß die Schaltstange (21) entgegen der Richrung des Hubes (16) des Maschinenteils (14) vorkragt.

4. Vorrichtung nach einem oder mehreren der Ansprüche 1 bis 3, gekennzeichnet durch Endschalter (24, 25, 26) als Signalgeber.

5. Vorrichtung nach einem oder mehreren der Ansprüche 1 bis 4, gekennzeichnet durch eine teleskopierbare Schaltstange (21).

6. Vorrichtung nach einem oder mehreren der Ansprüche 1 bis 5, gekennzeichnet durch ein die Schaltstange (21) teleskopierendes Stellglied (38).

7. Vorrichtung nach Anspruch 6, gekennzeichnet durch eine die Schaltstange (21) beaufscchlagende mechanische oder pneumatische Druckfeder (34, 134, 234) als Stellglied (38).

8. Vorrichtung nach einem oder mehreren der Ansprüche 1 bis 7, gekennzeichnet durch eine die Druckfeder (34, 134) aufnehmende Sackbohrung (29) in der in Hubrichtung (16) abgewandten Stirnseite (20) des beweglichen Maschinenteils (14) und ein fluchtend mit der Sackbohrung (29) angeordnetes, die Schaltstange (21) umhüllendes Führungsrohr (28, 128).

9. Vorrichtung nach einem oder mehreren der Ansprüche 1 bis 7, dadurch gekennzeichnet, daß die Druckfeder (34, 134) von einem Führungsrohr (28, 128) aufgenommen wird und sich an der in Hubrichtung (16) abgewandten Stirnseite (20) des beweglichen Maschinenteils (14) abstützt.

10. Vorrichtung nach einem oder mehreren der Ansprüche 1 bis 9, gekennzeichnet durch ein den vorderen Abschnitt des in das Führungsrohr (28) eingreifenden Endes oder Schaltstange (21) fest umschließendes Anschlagrohr (30), das sich gegen einen die aus dem Führungsrohr (28) vorkragende Schaltstange (21) beim Hub (16) begrenzenden, an einem Flansch (33) des Führungsrohres (28) befestigten Deckel (32) legt.

1.1. Vorrichtung nach einem oder mehreren der Ansprüche 1 bis 9, dadurch gekennzeichnet, daß das Führungsrohr (128) aus einem äußeren Rohrabschnitt (39) und mindestens einem inneren, die Schaltstange (21) unmittelbar umhüllenden Rohrabschnitt (40) besteht, und daß jeder innere Rohrabschnitt (40) wie die Schaltstange (21) druckfederbeaufschlagt teleskopierbar ist.

12. Vorrichtung nach Anspruch 11, dadurch gekennzeichnet, daß jeder innere Rohrabschnitt (40) an dem in den jeweils äußeren Rohrabschnitt (39) eingreifenden Ende und die Schaltstange (21) an dem in den inneren Rohrabschnitt (40) eingreifenden Ende fest von einem Anschlagrohr (130 bzw. 230) umschlossen wird, wobei sich die Anschlagrohre (130 bzw. 230) gegen einen den aus dem jeweils äußeren Rohrabschnitt (39) vorkragenden inneren Rohrabschnitt (40) beim Ausfahren begrenzenden und gegen eine die aus dem inneren Rohrabschnitt (40) vorkragende Schaltstange (21) beim Ausfahren begrenzenden, an einem Flansch (133 bzw. 233) des jeweils äußeren und des inneren Rohrabschnittes (39 bzw. 40) befestigten Deckel (132 bzw. 232) legen.

13. Vorrichtung nach einem oder mehreren der Ansprüche 1 bis 12, gekennzeichnet durch einen in die Bewegungsbahn der Schaltstange (21) ragenden Anschlag (36).

14. Vorrichtung nach einem oder mehreren der Ansprüche 1 bis 13, gekennzeichnet durch eine in eine Führungsnut (41, 42) im jeweils inneren Rohrabschnitt (40) und in der Schaltstange (21) eingreifende Verdrehsicherung (35, 135, 235).

15. Vorrichtung nach einem oder mehreren der Ansprüche 1 bis 14, dadurch gekennzeichnet, daß die Verdrehsicherung (35, 135, 235) am Anschlagdeckel (32, 132, 232) des Führungsrohres (28) oder der Rohrabschnitte (39, 40) befestigt ist.

Fig.1

Fig. 2

0 267 545

Fig. 3

Fig. 4

0 267 545